# EUROPÄISCHE PATENTSCHRIFT

(11) **EP 1 137 508 B1**
(45) Veröffentlichungstag und Bekanntmachung des Hinweises auf die Patenterteilung: **24.09.2003**
(21) Anmeldenummer: 99964390.1
(22) Anmeldetag: 03.12.1999
(51) Int. Cl.: B23Q 1/00

(54) **WERKZEUGMASCHINE MIT HORIZONTAL ANGEORDNETER ARBEITSSPINDEL**
MACHINE TOOL WITH A HORIZONTAL WORK SPINDLE
MACHINE-OUTIL DOTEE D'UNE BROCHE PORTE-OUTIL HORIZONTALE

(30) Priorität: 09.12.1998 DE 19857012
(43) Veröffentlichungstag der Anmeldung: 04.10.2001
(73) Patentinhaber: Schwäbische Werkzeugmaschinen GmbH, 78713 Schramberg-Waldmössingen (DE)
(72) Erfinder: KROLL, Dieter, D-35466 Rabenau (DE); ARMLEDER, Wolfgang, D-78628 Rottweil (DE)
(74) Vertreter: KOHLER SCHMID + PARTNER
(86) Internationale Anmeldenummer: DE9903871
(87) Internationale Veröffentlichungsnummer: WO00034003

(56) Entgegenhaltungen:
- EP-A- 0 015 372
- EP-A- 0 816 012
- EP-A- 0 845 325
- WO-A-90/05053
- WO-A-97/27024
- DE-C- 19 639 527
- SOVIET PATENTS ABSTRACTS Section PQ, Week 8839, 9. November 1988 (1988-11-09) Derwent Publications Ltd., London, GB; Class P56, AN 88276863 XP002139174 & SU 1 380 915 A (DIAMOND DRILL RADIA), 15. März 1988 (1988-03-15)

## Beschreibung

Die Erfindung betrifft eine Werkzeugmaschine zur insbesondere spanenden Bearbeitung von Werkstücken, mit Seitenwänden, die durch mindestens einen Querträger miteinander verbunden sind und mindestens eine etwa horizontal angeordnete Bearbeitungseinheit tragen, und mit einem Werkstücktisch für zu bearbeitende Werkstücke, der in zwei einander gegenüberliegenden Seitenwänden drehbar gelagert ist, wobei während des Betriebs der Werkzeugmaschine zwischen Werkstück und Bearbeitungseinheit Kräfte insbesondere in Z-Richtung wirken.

Eine derartige Werkzeugmaschine gemäβ dem Oberbegriff des unabhängigen Anspruchs 1 ist zum Beispiel durch die DE 196 39 527 C1 bekanntgeworden.

Bei dieser bekannten Werkzeugmaschine sind auf einem gemeinsamen Maschinenunterständer ein senkrechter rahmenartiger Werkzeugträger mit oberem waagerechten Querträger und parallel gegenüberliegend ein senkrechter rahmenartiger Werkstückträger mit oberem waagerechten Querträger angeordnet. Diese beiden etwa gleich hohen oberen Querträger sind über einen oder mehrere Verbindungsträger zu einer stabilen Einheit verbunden, so daß Verlagerungen zwischen Werkstückseite und Werkzeugseite , die sonst z.B. aufgrund hoher Beschleunigungs- und Bearbeitungskräfte in Z-Richtung auftreten können, über den bzw. die Verbindungsträger abgeleitet werden.

Der bekannte Verbindungsträger ist gabelförmig ausgebildet und mit einem Schenkel am oberen Querträger des Werkstückträgers befestigt, während die Enden der beiden gabelförmigen Schenkel mit dem Querträger des Werkzeugträgers, auf diesem aufliegend, befestigt sind. Je nach den räumlichen Gegebenheiten und den Fertigungserfordernissen wird der Verbindungsträger mittig, außermittig oder auch an einem Ende des Querträgers befestigt. Als separat herzustellendes Spezialteil bedeutet dieser Verbindungsträger zusätzlichen Herstellungs- und Fertigungsaufwand.

Es ist die Aufgabe der Erfindung, eine Werkzeugmaschine der eingangs genannten Art derart weiterzubilden, daß Verlagerungen zwischen Werkstückseite und Werkzeugseite auch ohne spezialangefertigte Teile wirkungsvoll verhindert werden können.

Diese Aufgabe wird erfindungsgemäß dadurch gelöst, daß die beiden Seitenwände, in denen der Werkstücktisch drehbar gelagert ist, auch die Bearbeitungseinheit tragen.

Der mit der Erfindung erzielte Vorteil besteht darin, daß die zwischen Werkzeug und Werkstück wirkenden Kräfte, da sowohl Werkzeug als auch Werkstück an den beiden gemeinsamen Seitenwänden gehalten sind, von diesen Seitenwänden aufgenommen werden. Insbesondere treten Beschleunigungs- und Bearbeitungskräfte insbesondere in Z-Richtung auf, wenn Werkstück und Bearbeitungseinheit in dieser Richtung relativ zueinander bewegbar sind. Außerdem können die Seitenwände vorteilhaft als seitliche Schutzwände gegen Späne etc. genutzt werden.

Bei bevorzugten Ausführungen der Erfindung ist an den beiden einander gegenüberliegenden Seitenwänden jeweils eine etwa senkrechte Führung für einen Y-Schlitten der Bearbeitungseinheit (z.B. eine oder mehrere Arbeitsspindeln) vorgesehen, welche vorzugsweise auch noch über einen X- und Z-Schlitten dreidimensional verfahrbar gelagert ist.

Bei besonders bevorzugten Ausführungsformen der Erfindung sind die beiden einander gegenüberliegenden Seitenwände durch einen oberen Querträger miteinander verbunden.

In einer Weiterbildung kann der gemeinsame obere Querträger eine Öffnung aufweisen, durch die ein Werkzeugwechsler auf die Höhe der Bearbeitungseinheit abgesenkt werden kann, um deren Werkzeug zu wechseln.

Bei einer weiteren vorteilhaften Ausführungsform weisen Werkzeugträger und Werkstückträger als Unterbau einen einzigen gemeinsamen unteren Querträger auf.

In einer ganz besonderen Weiterbildung dieser Ausführungsform können die einander gegenüberliegenden Seitenwände, der untere Querträger und der obere Querträger zu einem gemeinsamen Rahmen zusammengefaßt sein. Gleichzeitig stellt dieser in sich geschlossene Rahmen bereits eine Schutzverkleidung gegen Späne etc. dar.

Der gemeinsame Rahmen kann als ein einstückiges Gußteil gefertigt sein oder aus mehreren miteinander verbundenen, insbesondere verschweißten Einzelteilen zusammengesetzt sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so daß die wesentlichen Merkmale der Erfindung gut zu erkennen ist. Die Darstellungen sind nicht notwendigerweise maßstäblich zu verstehen.

Es zeigt:
- Fig. 1: eine nicht zur Erfindung gehörende Werkzeugmaschine in perspektivischer Ansicht;
- Fig. 2: die Werkzeugmaschine der Fig. 1 mit Arbeitsspindel und Werkzeugwechsler in einem Längsschnitt;
- Fig. 3: eine andere, nicht zur Erfindung gehörende Werkzeugmaschine in perspektivischer Ansicht;
- Fig. 4: ein Ausführungsbeispiel der erfindungsgemäßen Werkzeugmaschine in perspektivischer Ansicht; und
- Fig. 5: die Werkzeugmaschine der Fig. 4 mit Arbeitsspindel und Werkzeugwechsler in einem Längsschnitt.

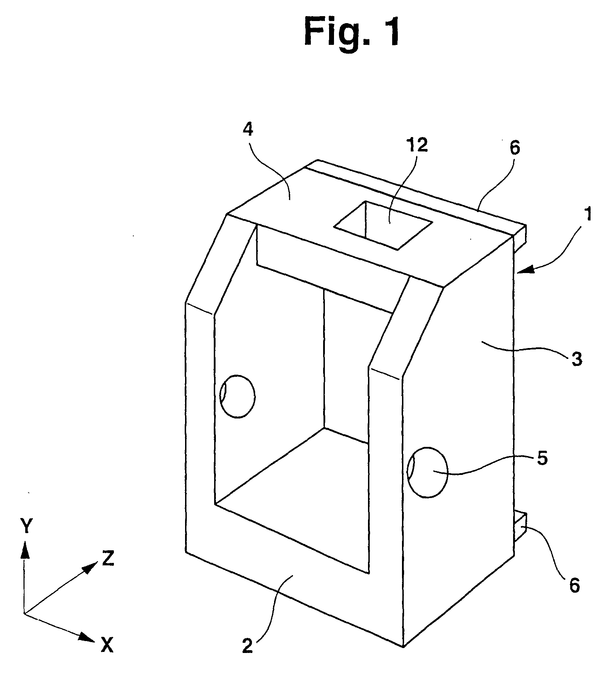

Der in Fig. 1 gezeigte, in sich geschlossene Rahmen **1** einer Werkzeugmaschine dient als Werkstück- und Werkzeugträger und weist dazu als Unterbau einen waagerechten unteren Querträger **2**, zwei Seitenwände **3** und einen waagerechten oberen Querträger **4** auf. Über jeweils eine Lageröffnung **5** in den beiden Seitenwänden **3** ist ein Werkstücktisch (nicht gezeigt) für zu bearbeitende Werkstücke innerhalb des Rahmens **1** drehbar gelagert.

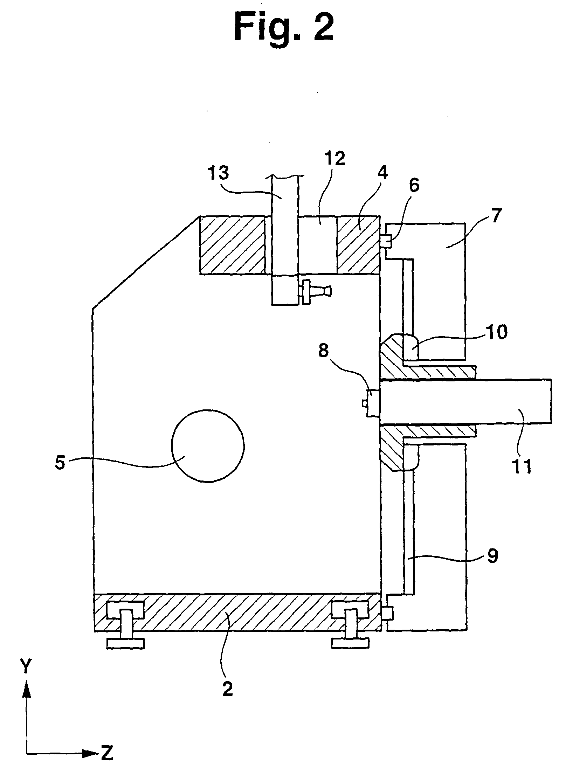

An den in Fig. 1 hinteren Stirnseiten der beiden Querträger 2, 4 verlaufen jeweils waagerechte Führungen **6** für einen X-Schlitten **7** (Fig. 2) einer Schlitteneinheit, mittels der eine Arbeitsspindel **8** in X-, Y- und Z-Richtung verfahren werden kann. Dazu sind am X-Schlitten 7 senkrechte Führungen **9** für einen Y-Schlitten **10** vorgesehen, in dem ein pinolenartiger Z-Schlitten **11** in Z-Richtung verfahrbar ist. Im oberen Querträger 4 ist noch eine Öffnung **12** vorgesehen, durch die ein Werkzeugwechsler **13** zum Wechseln des Werkzeugs der Arbeitsspindel 8 von oben in den Innenraum des gemeinsamen Rahmens 1 verfahren werden kann.

Der gemeinsame Rahmen 1 ist als ein einstückiges Gußteil dargestellt.

Die in Z-Richtung beim Relativverfahren von Arbeitsspindel 8 und Werkstück und insbesondere die beim Bearbeiten des Werkstücks mit dem in der Arbeitsspindel 8 eingespannten Werkzeug wirkenden Kräfte werden über den oberen Querträger 4 auf die für Werkzeugträger und Werkstückträger gemeinsamen Seitenwände 3 abgeleitet und dort aufgenommen.

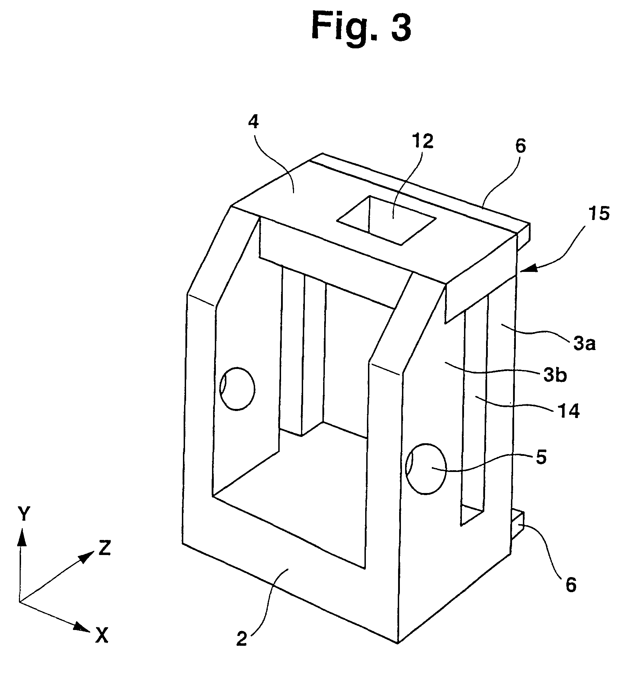

Bei der in Fig. 3 gezeigten Werkzeugmaschine sind die Seitenwand 3a des Werkzeugträgers und die Seitenwand 3b des Werkstückträgers nicht zu einer gemeinsamen Seitenwand zusammengefaßt, sondern durch eine Öffnung **14** getrennt. Diese Öffnung 14 kann z.B. zum Einrichten der Werkzeugmaschine genutzt werden. Wenn zwischen Arbeitsspindel und Werkstück und damit zwischen den beiden Seitenwänden 3a, 3b in Z-Richtung Kräfte wirken, werden diese auf den gemeinsamen oberen Querträger 4 abgeleitet und dort aufgenommen, so daß eine Relatiwerlagerung zwischen Arbeitsspindel und Werkstück nicht auftreten kann. Der gemeinsame Rahmen **15** besteht aus einem separaten Querträger 4, der mit den Seitenwänden 3a, 3b zu einer stabilen Einheit verschweißt ist.

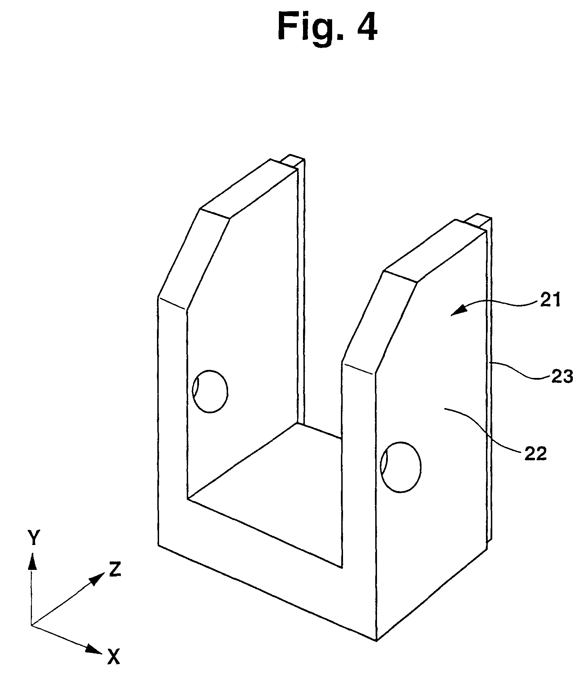

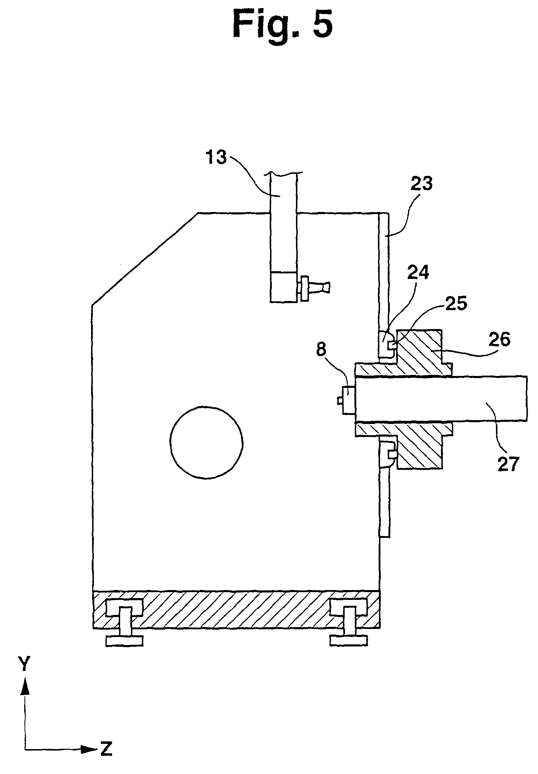

Bei dem in Fig. 4 gezeigten Rahmen **21** sind seine beiden (gemeinsamen) Seitenwände **22** nicht durch einen oberen Querträger miteinander verbunden. An den in Fig. 4 hinteren senkrechten Stirnseiten der beiden Seitenwände 22 verlaufen jeweils senkrechte Führungen **23** für einen Y-Schlitten **24** (Fig. 5), an dem waagerechte Führungen **25** für einen X-Schlitten **26** vorgesehen sind. An diesem wiederum ist der pinolenartige Z-Schlitten **27** mit der Arbeitsspindel 8 in Z-Richtung verfahrbar gelagert.

Die in Fig. 4 dargestellte Werkzeugmaschine kann anstatt mit nur einer Arbeitsspindel jeweils auch mit mehreren Arbeitsspindeln ausgestattet sein.

Mit anderen Worten betrifft die Erfindung eine Werkzeugmaschine zur insbesondere spanenden Bearbeitung von Werkstükken, mit Seitenwänden, die einen drehbar gelagerten Werkstücktisch für zu bearbeitende Werkstücke und mindestens eine etwa horizontal angeordnete Bearbeitungseinheit (Arbeitsspindel 8) tragen, wobei während des Betriebs der Werkzeugmaschine zwischen Werkstück und Bearbeitungseinheit Kräfte insbesondere in Z-Richtung wirken, wobei der Werkstücktisch in zwei einander gegenüberliegenden Seitenwänden (22) drehbar gelagert ist und wobei diese beiden Seitenwände (22) auch die Bearbeitungseinheit tragen.

## Patentansprüche

1. Werkzeugmaschine zur insbesondere spanenden Bearbeitung von Werkstücken, mit Seitenwänden (22), die durch mindestens einen Querträger (2) miteinander verbunden sind und mindestens eine etwa horizontal angeordnete Bearbeitungseinheit (8) tragen, und mit einem Werkstücktisch für zu bearbeitende Werkstücke, der in zwei einander gegenüberliegenden Seitenwänden (22) drehbar gelagert ist, wobei während des Betriebs der Werkzeugmaschine zwischen Werkstück und Bearbeitungseinheit Kräfte insbesondere in Z-Richtung wirken,
**dadurch gekennzeichnet,**
**dass** die beiden Seitenwände (22), in denen der Werkstücktisch drehbar gelagert ist, auch die Bearbeitungseinheit (8) tragen.

2. Werkzeugmaschine nach Anspruch 1, **dadurch gekennzeichnet, dass** an den beiden einander gegenüberliegenden Seitenwänden (22) jeweils eine etwa senkrechte Führung (23) für einen Y-Schlitten (24) der Bearbeitungseinheit (8) vorgesehen ist.

3. Werkzeugmaschine nach Anspruch 1 oder 2, **dadurch gekennzeichnet, dass** die beiden einander gegenüberliegenden Seitenwänden (22) durch einen oberen Querträger miteinander verbunden sind.

4. Werkzeugmaschine nach Anspruch 3, **dadurch gekennzeichnet, dass** der obere Querträger eine Öffnung für einen Werkzeugwechsler (13) aufweist.

5. Werkzeugmaschine nach einem der vorhergehenden Ansprüche, **dadurch gekennzeichnet, dass** als Unterbau für die beiden einander gegenüberliegenden Seitenwände (22) ein unterer Querträger vorgesehen ist.

6. Werkzeugmaschine nach Anspruch 4 und 5, **dadurch gekennzeichnet, dass** die beiden einander gegenüberliegenden Seitenwände (22), der untere Querträger und der obere Querträger zu einem gemeinsamen Rahmen zusammengefasst sind.

7. Werkzeugmaschine nach Anspruch 6, **dadurch gekennzeichnet, dass** der gemeinsame Rahmen ein einstückiges Gussteil ist.

8. Werkzeugmaschine nach Anspruch 6, **dadurch gekennzeichnet, dass** der gemeinsame Rahmen aus mehreren miteinander verbundenen, insbesondere verschweissten Einzelteilen gebildet ist.

## Claims

1. Machine tool, in particular for cutting treatment of workpieces, comprising side walls (22) which are connected via at least one transverse support (2) and support at least one horizontally disposed processing unit (8) and comprising a tool table for workpieces to be processed which is rotatably disposed in two opposing side walls (22), wherein during operation of the machine tool, forces, in particular in the Z direction, act between workpiece and processing unit, **characterized in that** the two side walls (22) in which the workpiece table is rotatably disposed also support the processing unit (8).

2. Machine tool according to claim 1, **characterized in that** an approximately vertical guide (23) is provided on each of the two opposite side walls (22), for a Y slide (24) of the processing unit (8).

3. Machine tool according to claim 1 or 2, **characterized in that** the two opposite side walls (22) are connected via an upper transverse support.

4. Machine tool according to claim 3, **characterized in that** the upper transverse support (4) comprises an opening (12) for a tool exchanger (13).

5. Machine tool according to any one of the preceding claims, **characterized in that** a lower transverse support is provided as base for the two opposite side walls (22).

6. Machine tool according to claims 4 and 5, **characterized in that** the two opposite side walls (22), the lower transverse support and the upper transverse support are combined into a common frame.

7. Machine tool according to claim 6, **characterized in that** the common frame is a one-piece casting.

8. Machine tool according to claim 6, **characterized in that** the common frame is formed of several interconnected, in particular welded individual parts.

## Revendications

1. Machine-outil, en particulier pour l'usinage de pièces à oeuvrer par enlèvement de matière, comprenant des parois latérales (22) qui sont reliées les unes aux autres au moins par une traverse (2) et qui portent au moins une unité d'usinage (8) agencée approximativement à l'horizontale, ainsi qu'une table pour pièces à oeuvrer qui est montée avec faculté de pivotement entre deux parois latérales (22) mutuellement opposées, des efforts, en particulier dans la direction Z, agissant entre la pièce à oeuvrer et l'unité d'usinage pendant le fonctionnement de la machine-outil, **caractérisée en ce que** les deux parois latérales (22), dans lesquelles la table pour pièces à oeuvrer est montée, portent aussi l'unité d'usinage (8).

2. Machine-outil selon la revendication 1, **caractérisée en ce qu'**un guidage approximativement vertical (23) est prévu respectivement sur les deux parois latérales (22) mutuellement opposées, pour un chariot Y (24) de l'unité d'usinage (8).

3. Machine-outil selon l'une ou l'autre des revendications 1 et 2, **caractérisée en ce que** les deux parois latérales (22) mutuellement opposées sont reliées entre elles par une traverse supérieure.

4. Machine-outil selon la revendication 3, **caractérisée en ce que** la traverse supérieure présente une ouverture pour un échangeur d'outil (13).

5. Machine-outil selon l'une des revendications précédentes, **caractérisée en ce qu'**une traverse inférieure est prévue comme soubassement pour les deux parois latérales (22) mutuellement opposées.

6. Machine-outil selon l'une ou l'autre des revendications 4 et 5, **caractérisée en ce que** les deux parois latérales (22) mutuellement opposées, la traverse inférieure et la traverse supérieure sont regroupées en un cadre commun.

7. Machine-outil selon la revendication 6, **caractérisée en ce que** le cadre commun est une pièce de fonderie d'un seul tenant.

8. Machine-outil selon la revendication 6, **caractérisée en ce que** le cadre commun se constitue de plusieurs pièces individuelles reliées, en particulier soudées, les unes aux autres.
